(19) Europäisches Patentamt
European Patent Office
Office européen des brevets

(11) EP 1 571 176 A1

(12) EUROPEAN PATENT APPLICATION

(43) Date of publication:
07.09.2005 Bulletin 2005/36

(51) Int Cl.[7]: **C08K 3/04**, C08K 3/22, C08L 67/02, F16F 9/00

(21) Application number: 05101303.5

(22) Date of filing: 21.02.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 01.03.2004 JP 2004056423
01.07.2004 JP 2004195402
13.07.2004 JP 2004205823

(71) Applicant: MITSUBISHI GAS CHEMICAL COMPANY, INC.
Tokyo (JP)

(72) Inventors:
- Mukasa, Kazuaki
c/O Mitsubishi Gas Chem.Co.Inc.
Hiratsuka-shi,Kanagawa (JP)
- Yoshinaka, Satoshi
c/o Mitsubishi Gas Chem.Co.Inc.
Hiratsuka-shi,Kanagawa (JP)
- Ogawa, Shun c/o Mitsubishi Gas Chem.Co.Inc.
Hiratsuka-shi,Kanagawa (JP)
- Hayashi, Takeo c/o Mitsubishi Gas Chem.Co.Inc.
Hiratsuka-shi,Kanagawa (JP)

(74) Representative: Gille Struck Neidlein Prop Roos
Patentanwälte
Brucknerstrasse 20
40593 Düsseldorf (DE)

# (54) Resin composition with high vibration damping ability

(57) A resin composition contains dicarboxylic acid constitutional units and diol constitutional units and at least one of an electroconductive material and filler which is dispersed in the polyester resin. The polyester resin satisfies the relationship, $0.5 \leq (A1 + B1)/(A0 + B0) \leq 1$, wherein A0 is the number of total dicarboxylic acid constitutional units, B0 is the number of total diol constitutional units, A1 is the number of dicarboxylic acid constitutional units having an odd number of carbon atoms in a polyester main chain, and B1 is the number of diol constitutional units having an odd number of carbon atoms in the polyester main chain. The resin composition exhibits a high vibration damping ability.

EP 1 571 176 A1

## Description

BACKGROUND OF THE INVENTION

1. Field of the Invention

The present invention relates to resin compositions with a high vibration damping ability.

2. Description of the Prior Art

Soft vinyl chloride resins composed of a vinyl chloride resin added with a plasticizer have been known as a material to absorb vibration energy, for example, a vibration damping material. The soft vinyl chloride resins are designed so as to attenuate vibration energy by consuming vibration energy in the resins as frictional heat. However, the absorption and attenuation of energy is still insufficient.

Rubber materials such as butyl rubber and acrylonitrile-butadiene rubber have been widely used as vibration damping materials excellent in processability, mechanical strength and costs. Although, these rubber materials are most excellent in attenuation performance (transfer-insulating or transfer-reducing performance of vibration energy) among polymeric materials, the vibration damping ability (absorbability of vibration energy) thereof is low for its sole use as a vibration damping material. Therefore, to apply it, for example, to vibration proof structures for buildings or apparatuses, the rubber materials have been used in composite forms such as a laminate of the rubber material and a steel plate and a vibration damping structure of the laminate combined with a lead core that absorbs vibration energy by plastic deformation or an oil damper.

As mentioned above, the conventional rubber materials cannot be solely used as vibration damping materials and should be made into composite forms, inevitably making the vibration proof structures complicated. Therefore, it has been demanded to enhance the vibration damping ability of the vibration damping materials themselves and the rubber materials themselves.

There have been already disclosed compositions composed mainly of a polymeric material and a piezoelectric powdery material (JP 60-51750A, JP 3-188165A and Inaba, et al., Relationship between Mechanical Properties and Damping Performance of Piezoelectric Damping Composites: Journal of The Society of Rubber Industry, Japan, vol. 67, p. 564 (1994)). These compositions are intended to absorb and attenuate vibrations by converting vibration energy into electric energy by the action of electro-mechanical conversion of the piezoelectric material and dispersing electric energy. However, to achieve a sufficient effect, the compositions must contain the piezoelectric particles in an amount as large as 50% by mass or more. The blending in such a high content lowers the fluidity in a molten state and makes the kneading and molding difficult. In addition, since the piezoelectric particles are made of ceramics such as lead zirconate titanate and barium titanate, the composition is unfavorably increased in its mass.

There have been disclosed vibration damping materials comprising a polymer matrix that contains an active ingredient for increasing dipole moment (Japanese Patents 3318593 and 3192400 and Inoue, et al. Damping Behaviors of Chlorinated Polyethylene/N,N'-Dicyclohexyl-2-Benzothiazole Sulfenamide Organic Hybrid: Journal of The Society of Fiber Science and Technology, Japan, vol. 56, p. 443 (2000)). Since the active ingredient for the vibration damping materials is a low-molecular compound, it exudates from the polymer matrix to unfavorably deteriorate the performances.

There have been already disclosed vibration damping materials composed of a polyester resin and an electroconductive material (JP 2003-221496A, JP 7-179735A, JP 6-136104A, JP 6-329770A, JP 6-263972A, JP 2000-281886A, JP 6-73276A, JP 6-16913A, JP 2003-241766A, JP 2003-171820A and JP 5-222239A). However, these documents are completely silent about a vibration damping material prepared by dispersing an electroconductive material in a polyester resin satisfying the following relationship I:

$$0\text{-}5 \leq (A1 + B1)/(A0 + B0) \leq 1 \qquad (I)$$

wherein A0 is the number of dicarboxylic acid constitutional units, B0 is the number of diol constitutional units, A1 is the number of dicarboxylic acid constitutional units having an odd number of carbon atoms in a polyester main chain, and B1 is the number of diol constitutional units having an odd number of carbon atoms in the polyester main chain. The composite vibration damping material made of a viscoelastic resin composed of a copolyester, a crosslinking agent, etc. as disclosed in JP 2003-221496A is not produced easily because a step of crosslinking reaction by heating is needed. In addition, since the glass transition temperature of the usable copolyester is limited to the range from -60 to 0°C, the proposed material does not fully meet the requirements for the material excellent in flexibility. Also disclosed are a sound damping structure using nonwoven fabric (JP 2003-241766A), a sound damping fiber using a piezoelectric

polymer (JP 2003-171820A), a vibration damping steel plate using a viscoelastic resin for vibration damping material (JP 5-222239A), etc. However, the details about the components constituting the polyester resin are not described in these documents.

There have been already disclosed resin compositions composed of a polymeric material and a filler (JP 10-67901A, JP 10-231385A, JP 9-3305A, JP 9-3306A, JP 7-118448A, Japanese Patent 3000417, JP 6-272734A, JP 4-45141A, JP 61-192753A, and WO 2002/053647). However, these documents do not disclose a vibration damping material prepared by incorporating fillers into a polyester resin satisfying the relationship I. The thermoplastic polymer composition containing a styrene resin disclosed in JP 10-67901A and the composition for vibration damping material containing polyvinyl chloride, chlorinated polyethylene and epoxidized polyisoprene disclosed in JP 10-231385A are not so high in the vibration damping ability for a relatively large thickness, 2 mm or 3 mm, of sample pieces, showing that a well satisfactory vibration damping material is not achieved by merely incorporating fillers into the polymer matrix. WO 2002/053647 discloses a vibration damping material containing a viscoelastic polymer. Although, examples of the viscoelastic polymers are provided therein, the document is completely silent about details of the raw material for constituting the viscoelastic polymer.

## SUMMARY OF THE INVENTION

An object of the present invention is to provide a resin composition made mainly of a polymeric material, which is lightweight, exhibits a more excellent vibration damping ability, and is produced easily.

As a result of extensive research to achieve the above object, the inventors have found that in a resin composition produced by dispersing an electroconductive material and/or filler into a polyester resin containing dicarboxylic acid constitutional units and diol constitutional units, the vibration damping ability of the resin composition is significantly improved over a wide temperature range including ordinary temperature by using a specific polyester resin. The present invention is based on this finding.

Thus, the present invention relates a resin composition comprising a polyester resin containing dicarboxylic acid constitutional units and diol constitutional units and at least one of an electroconductive material and filler which is dispersed in the polyester resin, wherein the polyester resin satisfies the following relationship I:

$$0.5 \leq (A1 + B1)/(A0 + B0) \leq 1 \qquad (I)$$

wherein A0 is the number of total dicarboxylic acid constitutional units, B0 is the number of total diol constitutional units, A1 is the number of dicarboxylic acid constitutional units having an odd number of carbon atoms in a polyester main chain, and B1 is the number of diol constitutional units having an odd number of carbon atoms in the polyester main chain.

The invention further relates a vibration damping material made of the resin composition mentioned above.

The invention still further relates to a vibration damper comprising a shaped article of the vibration damping material.

## DETAILED DESCRIPTION OF THE INVENTION

The present invention is described in detail below.

The resin composition of the invention contains, as a polymeric material, a polyester resin containing dicarboxylic acid constitutional units and diol constitutional units. A high vibration damping performance is achieved by dispersing an electroconductive material and/or a filler into a polyester resin satisfying the following relationship I:

$$0.5 \leq (A1 + B1)/(A0 + B0) \leq 1 \qquad (I)$$

wherein A0 is the number of total dicarboxylic acid constitutional units, B0 is the number of total diol constitutional units, A1 is the number of dicarboxylic acid constitutional units having an odd number of carbon atoms in a polyester main chain, and B1 is the number of diol constitutional units having an odd number of carbon atoms in the polyester main chain. In the invention, "the number of carbon atoms in the polyester main chain" of the dicarboxylic acid constitutional units or the diol constitutional units is the number of carbon atoms present in the shortest path along the polyester main chain in each monomer unit intervening between one ester linkage (-C(=O)-O-) and the next ester linkage.

The ratio, (A1 + B1)/(A0 + B0), is preferably 0.7 to 1, and the odd number for A1 and B1 is preferably 1, 3, 5, 7 or 9.

Examples of the dicarboxylic acid constitutional units having an odd number of carbon atoms in the polyester main chain include constitutional units derived from isophthalic acid, malonic acid, glutaric acid, pimelic acid, azelaic acid, undecanedioic acid, brassilic acid, 1,3-cyclohexanedicarboxylic acid, etc., with the constitutional units derived from isophthalic acid, azelaic acid and 1,3-cyclohexanedicarboxylic acid being preferred and the constitutional unit derived from isophthalic acid being more preferred. The polyester resin may include one or more kinds of constitutional units derived from the above dicarboxylic acids. If two or more kinds of constitutional units are included, preferred are those derived from isophthalic acid and azelaic acid.

Examples of the diol constitutional units having an odd number of carbon atoms in the polyester main chain include constitutional units derived from 1,3-propanediol, 1,3-butanediol, 2-methyl-1,3-propanediol, 1,3-pentanediol, 1-methyl-1,3-butanediol, 2-methyl-1,3-butanediol, neopentyl glycol, 1,3-hexanediol, 3-methyl-1,3-butanediol, 1-methyl-1,3-butanediol, 1,5-pentanediol, 2-methyl-1,5-pentanediol, 3-methyl-1,5-pentanediol, 1,5-hexanediol, 2-ethyl-1,5-pentanediol, 2-propyl-1,5-pentanediol, m-xylene glycol, 1,3-cyclohexanediol, 1,3-bis(hydroxymethyl)cyclohexane, etc., with the constitutional units derived from 1,3-propanediol, 1,3-butanediol, 2-methyl-1,3-propanediol, neopentyl glycol, 1,5-pentanediol, m-xylene glycol and 1,3-cyclohexanediol being preferred and the constitutional units derived from 1,3-propanediol, 1,5-pentanediol, 2-methyl-1,3-propanediol, 1,3-butanediol and neopentyl glycol being more preferred. The polyester resin may include one or more kinds of constitutional units derived from the above diols.

To achieve a still higher vibration damping ability, it is preferred that the polyester resin satisfies the following relationship II:

$$0.5 \leq A1/A0 \leq 1 \qquad (II)$$

wherein A1 and A0 are as defined above, and
the following relationship III:

$$0.5 \leq B2/B0 \leq 1 \qquad (III)$$

wherein B0 is as defined above and B2 is the number of constitutional units derived from the diol represented by the following formula 1:

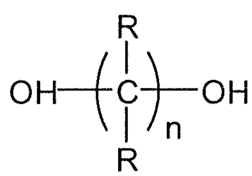

(1)

wherein n is 3 or 5, and Rs may be the same or different and each independently hydrogen atom or $C_1$ to $C_3$ alkyl group, and further satisfies the following requirements A and B:

(A) an intrinsic viscosity is 0.2 to 2.0 dL/g when measured at 25°C in a 40/60 by weight trichloroethane/phenol mixed solvent, and
(B) a heat value of a crystallization exotherm peak is 5 J/g or lower (inclusive of zero) when measured by a differential scanning calorimeter under temperature drop conditions. The ratio, A1/A0, is preferably 0.7 to 1.

Examples of the diols represented by the formula 1 include 1,3-propanediol, 1,3-butanediol, 2-methyl-1,3-propanediol, 1,3-pentanediol, 1-methyl-1,3-butanediol, 2-methyl-1,3-butanediol, neopentyl glycol, 1,3-hexanediol, 3-methyl-1,3-butanediol, 1,5-pentanediol, 2-methyl-1,5-pentanediol, 3-methyl-1,5-pentanediol, 1,5-hexanediol, 2-ethyl-1,5-pentanediol, and 2-propyl-1,5-pentanediol, with 1,3-propanediol, 1,5-pentanediol, 2-methyl-1,3-propanediol, 1,3-butanediol and neopentyl glycol being preferred.

To achieve a still higher vibration damping ability, it is more preferred that the polyester resin satisfies the relationship I, the following relationship IV:

$$0.7 \leq B2/B0 \leq 1 \qquad (IV)$$

wherein B0 and B2 are as defined above,
and the requirements A and B.

To achieve a still higher vibration damping ability, it is further preferred that the polyester resin satisfies the following relationship V:

$$0.5 \leq A2/A0 \leq 1 \quad (V)$$

wherein A0 is as defined above and A2 is the number of constitutional units derived from at least one dicarboxylic acid selected from the group consisting of isophthalic acid, malonic acid, glutaric acid, pimelic acid, azelaic acid, undecanedioic acid, brassilic acid and 1,3-cyclohexanedicarboxylic acid.

To achieve a still higher vibration damping ability, it is further preferred that the polyester resin satisfies the following relationship VI:

$$0.7 \leq A2/A0 \leq 1 \quad (VI)$$

wherein A0 and A2 are as defined above.

To achieve a still higher vibration damping ability, it is further preferred that the polyester resin satisfies the following relationship VII:

$$0.5 \leq A3/A0 \leq 1 \quad (VII)$$

wherein A0 is as defined above and A3 is the number of constitutional units derived from isophthalic acid.

To achieve a still higher vibration damping ability, it is still further preferred that the polyester resin satisfies the relationship V, the following relationship VIII:

$$0.5 \leq B3/B0 \leq 1 \quad (VIII)$$

wherein B0 is as defined above and B3 is the number of constitutional units derived from at least one diol selected from the group consisting of 1,3-propanediol, 1,5-pentanediol, 2-methyl-1,3-propanediol, 1,3-butanediol and neopentyl glycol,
and the requirements A and B.

To achieve a still higher vibration damping ability, it is still further preferred that the polyester resin satisfies the relationship V, the following relationship IX:

$$0.7 \leq B3/B0 \leq 1 \quad IX)$$

wherein B0 and B3 are as defined above,
and the requirements A and B.

In addition to the dicarboxylic acid constitutional units and the diol constitutional units mentioned above, the polyester resin used in the present invention may further contain other constitutional units in amounts not adversely affecting the effects of the invention. The types of other constitutional units are not critical, and the polyester resin may contain constitutional units derived from any of polyester-forming dicarboxylic acids and their esters (other dicarboxylic acids), polyester-forming diols (other diols) and polyester-forming hydroxycarboxylic acids and their esters (other hydroxycarboxylic). Examples of other dicarboxylic acids include dicarboxylic acids such as terephthalic acid, orthophthalic acid, 2-methylterephthalic acid, 2,6-naphthalenedicarboxylic acid, succinic acid, adipic acid, suberic acid, sebacic acid, dodecanedioic acid, 1,4-cyclohexanedicarboxylic acid, decalindicarboxylic acid, norbornanedicarboxylic acid, tricyclodecanedicarboxylic acid, pentacyclododecanedicarboxylic acid, isophoronedicarboxylic acid and 3,9-bis(2-carboxylethyl)-2,4,8,10-tetraoxaspiro[5.5]undecane; and tri- or more valent polycarboxylic acid such as trimellitic acid, trimesic acid, pyromellitic acid and tricarbarylic acid. Examples of other diols include aliphatic diols such as ethylene glycol, 1,2-propylene glycol, 2-methyl-1,2-propanediol, 1,4-butanediol, 1,6-hexanediol, 2,5-hexanediol, diethylene glycol and triethylene glycol; polyether compounds such as polyethylene glycol, polypropylene glycol and polybutylene glycol; tri or more valents polyhydric alcohols such as glycerin, tirmethylol propane and pentaerythritol; alicyclic diols such as 1,3-cyclohexane dimethanol, 1,4-cyclohexane dimethanol, 1,2-decahydronaphthalene dimethanol, 1,3-decahydronaphthalene dimethanol, 1,4-decahydronaphthalene dimethanol, 1,5-decahydronaphthalene dimethanol, 1,6-decahydronaphthalene dimethanol, 2,7-decahydronaphthalene dimethanol, tetralin dimethanol, norbornane dimethanol, tricyclodecane dimethanol, 5-methylol-5-ethyl-2-(1,1-dimethyl-2-hydroxyethyl)-1,3-dioxane, pentacyclodecane dimethanol and 3,9-bis(1,1-dimethyl-2-hydroxyethyl)-2,4,8,10-tetraoxaspiro[5.5]undecane; alkyleneoxide adducts of bisphenols such as 4,4'-(1-methylethylidene)bisphenol, methylenebisphenol (bisphenol F), 4,4'-cyclohexylidene bisphenol (bisphenol Z) and 4,4'-sulfonylbisphenol (bisphenol S); and alkyleneoxide adducts of aromatic dihydroxy compounds such as hydroquinone, resorcin, 4,4'-dihydroxybiphneyl, 4,4'-dihydroxydiphneyl ether and 4,4'-dihydroxydiphneylbenzophenone. Examples of other hydroxycarboxylic acid include hydroxybenzoic acid, dihydroxybenzoic acid, hydroxyisophthalic acid, hydroxyacetic acid, 2,4-dihydroxyacetophenone, 2-hydroxyhexadecanoic acid, 12-hydroxystearic acid, 4-hydroxyphthalic acid, 4,4'-bis(p-hydroxyphenyl)pentanoic acid and 3,4-dihydroxycinnamic acid.

The polyester resin may be produced by known methods without any particular limitation. In general, the polyester resin is produced by polycondensation of starting monomers, for example, by transesterification or direct esterification conducted by melt polymerization method and solution polymerization method. In these methods, there may be used conventionally known transesterification catalysts such as compounds of manganese, cobalt, zinc, titanium and calcium; esterification catalysts such as compounds of manganese, cobalt, zinc, titanium and calcium; etherification inhibitors such as amine compounds; polycondensation catalysts such as compounds of germanium, antimony, tin and titanium; stabilizers such as heat stabilizers, e.g. phosphorus compounds such as phosphoric acid, phosphorous acid and phenylphosphonic acid, and light stabilizers; antistatic agents; lubricants; antioxidants and mold release agents. The starting dicarboxylic acid components may be in either form of free acid and dicarboxylic derivative such as diester, dihalide, active acyl derivative and dinitrile.

In addition to the polyester resin, the resin composition of the present invention contains an electroconductive material and/or filler dispersed therein.

Known electroconductive materials are usable. Examples thereof include inorganic electroconductive materials, e.g., powders or fibers of metals such as silver, copper, copper alloys, nickel and low-melting alloys; fine particles of copper and silver each being coated with a noble metal; fine particles or whiskers of metal oxides such as tin oxide, zinc oxide and indium oxide; electroconductive carbon particles such as various carbon blacks and carbon nanotubes; and carbon fibers such as PAN-based carbon fibers, pitch-based carbon fibers and vapor-phase grown graphite, and organic conductive materials, e.g., low-molecular surfactant-type antistatic agents; polymer antistatic agents; electroconductive polymers such as polypyrrole and polyaniline; and metal-coated fine particles of polymers. These electroconductive materials may be used alone or in combination of two or more.

Of these electroconductive materials, preferred is at least one carbonaceous material selected from the group consisting of electroconductive carbon powders such as carbon blacks and carbon nanotubes, and carbon fibers such as PAN-based carbon fibers, pitch-based carbon fibers and vapor-phase grown graphite.

It is preferred that the electroconductive material to be used contains at least electroconductive carbon particles because the resultant resin composition exhibits a higher vibration damping ability.

The amount of the electroconductive material dispersed in the resin composition is not particularly limited, and preferably 0.01 to 25% by mass of the resin composition in view of achieving a high vibration damping ability. If the content is less than 0.01% by mass, the effect of the electroconductive material to improve the vibration damping ability is not obtained. Even if exceeding 25% by mass, the vibration damping ability is not improved so much for its high content and the moldability is instead deteriorated. To achieve a still higher vibration damping ability, the content of the electroconductive material is preferably 1 to 20% by mass and more preferably 5 to 20% by mass.

The mixing ratio between the polyester resin and the electroconductive material is preferably controlled so as to allow the resin composition to have a volume resistivity of $10^{12}$ Ω·cm or lower, because a still higher vibration damping ability is achieved. In the present invention, the volume resistivity is measured by the method of JIS K6911.

To improve the absorption of vibration energy by the polyester resin, the resin composition is preferably incorporated with filler. Inorganic scaly fillers are preferably used. Examples of the scaly fillers include mica scales, glass flakes, sericite, graphite, talc, aluminum flakes, boron nitride, molybdenum disulfide and graphite, with mica scales being preferred because a still higher vibration damping ability is attained. Other fillers with different shapes may be additionally used unless their use adversely affects the effects of the present invention. Examples of the fillers having shapes other than scaly shape include, but not limited to, glass fibers, carbon fibers, calcium carbonate, calcium sulfate, calcium silicate, titanium dioxide, zinc oxide, silicon dioxide, strontium titanate, barite, precipitated barium sulfate, magnesium silicate, aluminum silicate, ferrite, clay, vermiculite, montmorillonite, stainless steel flakes, nickel flakes, silica, borax, kiln ashes, cement, dolomite, iron powder, lead powder and copper powder.

The amount of the filler added is preferably 10 to 80% by mass of the total amount of the resin composition. If less than 10% by mass, the effect of improving the vibration damping ability by its addition is not obtained. Even if exceeding 80% by mass, the vibration damping ability is not improved so much for its high content and the moldability is instead deteriorated.

The resin composition of the invention is composed mainly of the polyester resin and the electroconductive material and/or the filler. However, the ingredients are not limited thereto and the resin composition may further contain, if necessary, at least one additive in amounts not adversely affect the effects of the invention. Examples of such additives include dispersants, compatibilizers, surfactants, antistatic agents, lubricants, plasticizers, flame retardants, crosslinking agents, antioxidants, anti-aging agents, weather-resisting agents, heat-resisting agents, processing aids, brighteners, colorants such as pigments and dyes, foaming agents and foaming aids. Other resins may be blended into the resin composition and the molded articles of the resin composition may be surface-treated unless the effects of the present invention are adversely affected.
The resin composition is produced by mixing the polyester resin, the electroconductive material and/or the filler, and the optional additives by known methods, for example, by a melt mixing using a mixing apparatus such as heat rolls, Banbury mixer, twin-screw kneader and extruder. In an alternative method, the polyester resin is dissolved into or swelled in a solvent and then dried after mixed with the electroconductive material and/or the filler, or the components are mixed in fine powder form. The method and order of mixing the electorconductive material, filler and additives are not particularly limited.
The vibration damping material made of the resin composition is molded or processed into injection-molded articles, sheets, films, fibers, containers, foamed articles, adhesives, paints, constrained damping sheets and non-constrained damping sheets which are suitably used as vibration insulators, vibration dampers and sound absorbers applicable to vehicles, rail road, airplanes, electric appliances, office automation apparatuses, precision apparatuses, building machines, civil engineering buildings, shoes, sport goods, etc.
The present invention will be described in more detail by reference to the examples. However, it should be noted that the following examples are only illustrative and not intended to limit the invention thereto.
The polyester resin and the resin composition were evaluated by the following methods.

(1) (A1 + B1)/(A0 + B0)
Calculated from integrated peak areas of 400 MHz $^1$H-NMR spectra.
(2) A1/A0
Calculated from integrated peak areas of 400 MHz $^1$H-NMR spectra.
(3) B2/B0
Calculated from integrated peak areas of 400 MHz $^1$H-NMR spectra.
(4) A2/A0
Calculated from integrated peak areas of 400 MHz $^1$H-NMR spectra.
(5) A3/A0
Calculated from integrated peak areas of 400 MHz $^1$H-NMR spectra.
(6) B3/B0
Calculated from integrated peak areas of 400 MHz $^1$H-NMR spectra.
(7) Molar Ratio of Constitutional Units of Polyester Resin
Calculated from integrated peak areas of 400 MHz $^1$H-NMR spectra.
(8) Volume Resistivity
Measured by the method according to JIS K6911.
(9) Intrinsic Viscosity [η]
Measured in a 40:60 by weight trichloroethane/phenol mixed solvent at 25°C using a Cannon-Fenske viscometer.
(10) Heat Value of Crystallization Exotherm Peak under Temperature Drop Conditions
The heat value of crystallization exotherm peak under temperature decrease conditions (ΔHc) of the polyester resin was measured by a differential scanning calorimeter "DSC/TA-50WS" available from Shimadzu Corporation. About 10 mg of sample was placed in an aluminum container without sealing. Then, in a nitrogen gas flow (30 mL/min), the sample was heated to 280°C at a temperature rise rate of 20°C/min, held at 280°C for one minute, and then cooled at a temperature drop rate of 10°C/min. The heat value was calculated from the area of the peak appeared during the temperature dropping.
(11) Loss Factor
A sample containing a polyester resin and an electroconductive material, etc. dispersed therein was hot-pressed at 100°C into a sheet of about 1 mm thick. From the sheet, a 10 mm × 150 mm test piece was cut out, which was heat-press bonded to a 1 mm-thick substrate (aluminum alloy 5052) at 50°C or bonded to the substrate by a two-part epoxy-based adhesive ("CEMEDINE SG-EPO EP008" tradename of Cemedine Co., Ltd.) to prepare a non-constrained vibration damper. Using a loss factor tester available from Ono Sokki Co., Ltd., the non-constrained vibration damper was tested for the loss factor at 500 Hz anti-resonance point in a measuring temperature of 0 to 80°C by center excitation method. The vibration damping ability was evaluated by comparing the maximum loss factors in the measuring temperature range. Larger the loss factor, the vibration damping ability is higher.

EXAMPLE 1

A 500-mL reaction vessel equipped with a stirrer, a partial condenser, a total condenser, a cold trap, a thermometer, a heater and a nitrogen inlet was charged with 115.57 g (0.7 mol) of isophthalic acid, 145.78 g (1.4 mol) of 1,5-pentanediol and 0.034 g of manganese acetate tetrahydrate catalyst (29 ppm in terms of manganese based on total charge), and the contents were heated to 220°C under ordinary pressure in a nitrogen atmosphere to cause esterification to proceed for 3.5 h. After the conversion of isophthalic acid reached 90 mol % or higher, 0.15 g of a titanium (IV) tetrabutoxide, monomer (89 ppm in terms titania based on total mass of initial condensation product) was added. After gradually raising the temperature and reducing the pressure, the polycondensation was allowed to proceed at 250 to 260°C under 0.4 kPa or lower while discharging 1,5-pentanediol out of the reaction system. The viscosity and the stirring torque of the reaction mixture gradually increased. The reaction was terminated when the viscosity reached an appropriate level or 1,5-pentanediol was no longer discharged.
Isophthalic acid: AG. International Chemical Co., Inc.
1,5-Pentanediol: Wako Pure Chemical Industries, Ltd.
Manganese acetate tetrahydrate: Wako Pure Chemical Industries, Ltd.
Titanium (IV) tetrabutoxide: Wako Pure Chemical Industries, Ltd.
The constitutional unit ratios of the obtained polyester are shown below.

(A1 + B1)/(A0 + B0): 1.0

A1/A0: 1.0

A2/A0: 1.0

B2/B0: 1.0

B3/B0: 1.0

In a twin-screw kneader, 90 parts by weight of the obtained polyester resin and 10 parts by weight of electroconductive carbon powder ("Ketjenblack EC", tradename of Ketjenblack International Co., Ltd.) were kneaded at 150°C to prepare a resin composition. The molar ratios of constitutional units and properties of resin composition are respectively shown in Tables 1 and 2.

EXAMPLE 2

In the same manner as in Example 1 except for using an isophthalic acid/azelaic acid mixture in place of the sole use of isophthalic acid, a polyester resin having the following unit ratios was produced.
Isophthalic acid: AG. International Chemical Co., Inc.
Azelaic acid: "EMEROX 1144" available from Cognis Co., Ltd. (dicarboxylic acid: 99.97%; azelaic acid: 93.3 %)

(A1 + B1)/(A0 + B0): 1.0

A1/A0: 1.0

A2/A0: 0.8

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 3

In the same manner as in Example 1 except for using a 1,5-pentanediol/1,3-propanediol mixture in place of the sole use of 1,5-pentane diol, a polyester resin having the following unit ratios was produced.
1,5-Pentanediol: Wako Pure Chemical Industries, Ltd.
1,3-Propanediol: Shell Chemicals Japan Co., Ltd.

(A1 + B1)/(A0 + B0):1.0

A1/A0: 1.0

A2/A0: 1.0

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 4

A 30-L polyester apparatus equipped with a packed fractionating column, a stirrer, a partial condenser, a total condenser, a cold trap, a thermometer, a heater and a nitrogen inlet was charged with 12375 g (75 mol) of isophthalic acid, 11400 g (150 mol) of 1,3-propanediol and 3.5 g of a manganese acetate tetrahydrate (33 ppm in terms of manganese based on total charge), and the contents were heated to 220°C under ordinary pressure in a nitrogen atmosphere to cause esterification to proceed for 3.5 h. After the conversion of isophthalic acid reached 90 mol % or higher, 12.2 g of a titanium (IV) tetrabutoxide, monomer (79 ppm in terms titania based on total mass of initial condensation product) was added. After gradually raising the temperature and reducing the pressure, the polycondensation was allowed to proceed at 250 to 260°C under 0.3 kPa or lower while discharging 1,3-propanediol out of the reaction system. The viscosity of the reaction mixture gradually increased. The reaction was terminated when the melt viscosity reached an appropriate level.
Isophthalic acid: AG. International Chemical Co., Inc.
1,3-Propanediol: Shell Chemicals Japan Co., Ltd.
Manganese acetate tetrahydrate: Wako Pure Chemical Industries, Ltd. Titanium (IV) tetrabutoxide, monomer: Wako Pure Chemical Industries, Ltd.
The constitutional unit ratios of the obtained polyester are shown below.

(A1 + B1)/(A0 + B0): 1.0

A1/A0: 1.0

A2/A0: 1.0

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 5

In the same manner as in Example 4 except for using an isophthalic acid/azelaic acid mixture in place of the sole use of isophthalic acid, a polyester resin having the following unit ratios was produced.
Isophthalic acid: AG. International Chemical Co., Inc.
Azelaic acid: "EMEROX 1144" available from Cognis Co., Ltd. (dicarboxylic acid: 99.97%; azelaic acid: 93.3 %)

(A1 + B1)/(A0 + B0):1.0

A1/A0: 1.0

A2/A0: 0.73

B2/B0: 1.0

B3/B0: 1.0

In a twin-screw kneader, 80 parts by weight of the obtained polyester resin and 20 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 6

In the same manner as in Example 4 except for using a 1,3-propanediol/m-xylylene glycol mixture in place of the sole use of 1,3-propanediol, a polyester resin having the following unit ratios was produced.
1,3-Propanediol: Shell Chemicals Japan Co., Ltd.

(A1 + B1)/(A0 + B0):1.0

A1/A0: 1.0

A2/A0: 1.0

B2/B0: 0.8

B3/B0: 0.8

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 7

In the same manner as in Example 4 except for using a 1,3-propanediol/neopentyl glycol mixture in place of the sole use of 1,3-propanediol, a polyester resin having the following unit ratios was produced.
1,3-Propanediol: Shell Chemicals Japan Co., Ltd.

(A1 + B1)/(A0 + B0):1.0

A1/A0: 1.0

A2/A0: 1.0

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 8

In the same manner as in Example 4 except for using 2-methyl- 1,3-propanediol in place of 1,3-propanediol, a polyester resin having the following unit ratios was produced.
2-Methyl-1,3-propanediol: Dai-Ren Chemical Industries, Ltd.

(A1 + B1)/(A0 + B0):1.0

A1/A0: 1.0

A2/A0: 1.0

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 9

In the same manner as in Example 4 except for using an isophthalic acid/azelaic acid mixture in place of the sole use of isophthalic acid and using 2-methyl-1,3-propanediol in place of 1,3-propanediol, a polyester resin having the following unit ratios was produced.
Isophthalic acid: AG. International Chemical Co., Inc.
Azelaic acid: "EMEROX 1144" available from Cognis Co., Ltd. (dicarboxylic acid: 99.97%; azelaic acid: 93.3 %)
2-Methyl-1,3-propanediol: Dai-Ren Chemical Industries, Ltd.

(A1 + B1)/(A0 + B0):1.0

A1/A0: 1.0

A2/A0: 0.8

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 10

In the same manner as in Example 4 except for using an isophthalic acid/azelaic acid mixture in place of the sole use of isophthalic acid and using 2-methyl-1,3-propanediol in place of 1,3-propanediol, a polyester resin having the following unit ratios was produced.
Isophthalic acid: AG. International Chemical Co., Inc.
Azelaic acid: "EMEROX 1144" available from Cognis Co., Ltd. (dicarboxylic acid: 99.97%; azelaic acid: 93.3 %)
2-Methyl-1,3-propanediol: Dai-Ren Chemical Industries, Ltd.

(A1 + B1)/(A0 + B0): 1.0

A1/A0: 1.0

A2/A0: 0.67

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

EXAMPLE 11

In the same manner as in Example 4 except for using an isophthalic acid/azelaic acid mixture in place of the sole use of isophthalic acid and using 2-methyl-1,3-propanediol in place of 1,3-propanediol, a polyester resin having the following unit ratios was produced.
Isophthalic acid: AG. International Chemical Co., Inc.
Azelaic acid: "EMEROX 1144" available from Cognis Co., Ltd. (dicarboxylic acid: 99.97%; azelaic acid: 93.3 %)
2-Methyl-1,3-propanediol: Dai-Ren Chemical Industries, Ltd.

(A1 + B1)/(A0 + B0):1.0

A1/A0: 1.0

A2/A0: 0.6

B2/B0: 1.0

B3/B0: 1.0

In a twin-screw kneader, 90 parts by weight of the obtained polyester resin and 10 parts by weight of electroconductive carbon powder (Ketjenblack EC) were kneaded at 150°C to prepare a resin composition. The molar ratios of constitutional units and properties of resin composition are respectively shown in Tables 1 and 2.

COMPARATIVE EXAMPLE 1

The polyester resin of Example 5 :

(A1 + B1)/(A0 + B0):1.0

A1/A0: 1.0

A2/A0: 0.73

B2/B0: 1.0

B3/B0: 1.0

was made into a resin composition in the same manner as in Example 5 except for omitting the use of the electroconductive carbon powder.
The molar ratios of constitutional units are shown in Tables 1 and 3, and the properties of resin composition are shown in Tables 2 and 4.

COMPARATIVE EXAMPLE 2

In the same manner as in Example 4 except for using terephthalic acid in place of isophthalic acid and using ethylene glycol in place of 1,3-propanediol, a polyester resin having the following unit ratios was produced. Terephthalic acid: Mizushima Aroma Co., Ltd.
Ethylene glycol: Nisso Maruzen Chemical Co., Ltd. (Fiber Grade)

(A1 + B1)/(A0 + B0): 0

A1/A0: 0

A2/A0: 0

B2/B0: 0

B3/B0: 0

In a twin-screw kneader, 90 parts by weight of the obtained polyester resin and 10 parts by weight of electroconductive carbon powder (Ketjenblack EC) were kneaded at 250°C to prepare a resin composition. The molar ratios of constitutional units and properties of resin composition are respectively shown in Tables 1 and 2.

COMPARATIVE EXAMPLE 3

In a twin-screw kneader, 90 parts by weight of a polyester resin PETG having the following unit ratios and 10 parts by weight of electroconductive carbon powder (Ketjenblack EC) were kneaded at 250°C to prepare a resin composition.
PETG: "EASTER 6763" (terephthalic acid/ethylene glycol/cyclohexanedimethanol) available from Eastman Chemical Co., Ltd.

(A1 + B1)/(A0 + B0): 0

A1/A0. 0

A2/A0: 0

B2/B0: 0

B3/B0: 0

The molar ratios of constitutional units and properties of resin composition are respectively shown in Tables 1 and 2.

COMPARATIVE EXAMPLE 4

In the same manner as in Example 4 except for using a terephthalic acid/sebacic acid mixture in place of isophthalic acid and using ethylene glycol in place of 1,3-propanediol, a polyester resin having the following unit ratios was produced.
Terephthalic acid: Mizushima Aroma Co., Ltd.
Sebacic acid: Hokoku Corporation
Ethylene glycol: Nisso Maruzen Chemical Co., Ltd. (Fiber Grade)

(A1 + B1)/(A0 + B0): 0

A1/A0: 0

A2/A0: 0

B2/B0: 0

B3/B0: 0

In a twin-screw kneader, 90 parts by weight of the obtained polyester resin and 10 parts by weight of a electroconductive carbon powder (Ketjenblack EC) were kneaded at 150°C to prepare a resin composition. The molar ratios of constitutional units and properties of resin composition are respectively shown in Tables 1 and 2.

Table 1

| Constitutional Units of Polyester | | | | | | | | | | | |
|---|---|---|---|---|---|---|---|---|---|---|---|
| | dicarboxylic acid units (molar ratio) | | | | diol units (molar ratio) | | | | | | |
| | IA | AzA | TA | SA | PDO | PeDO | MPO | EG | CHDM | MXG | NPG |
| Examples | | | | | | | | | | | |
| 1 | 100 | - | - | - | - | 100 | - | - | - | - | - |
| 2 | 80 | 20 | - | - | - | 100 | - | - | - | - | - |
| 3 | 100 | - | - | - | 10 | 90 | - | - | - | - | - |
| 4 | 100 | - | - | - | 100 | - | - | - | - | - | - |
| 5 | 73 | 27 | - | - | 100 | - | - | - | - | - | - |
| 6 | 100 | - | - | - | 80 | - | - | - | - | 20 | - |
| 7 | 100 | - | - | - | 70 | - | - | - | - | - | 30 |
| 8 | 100 | - | - | - | - | - | 100 | - | - | - | - |
| 9 | 80 | 20 | - | - | - | - | 100 | - | - | - | - |
| 10 | 67 | 33 | - | - | - | - | 100 | - | - | - | - |
| 11 | 60 | 40 | - | - | - | - | 100 | - | - | - | - |
| Comparative Examples | | | | | | | | | | | |
| 1 | 73 | 27 | - | - | 100 | - | - | | - | - | - |
| 2 | - | - | 100 | - | - | - | - | 100 | - | - | - |
| 3 | - | - | 100 | - | - | - | - | 67 | 33 | - | - |
| 4 | - | - | 50 | 50 | - | - | - | 100 | - | - | - |

IA: Isophthalic acid
AzA: Azelaic acid
TA: Terephthalic acid
SA: Sebacic acid
PDO: 1,3-Propane diol
PeDO: 1,5-Pentane diol
MPO: 2-Methyl-1,3-propane diol
EG: Ethylene glycol
CHDM: Cyclohexane dimethanol
MXG: m-Xylene glycol
NPG: Neopentyl glycol

Table 2

| | [η] (dL/g) | ΔHc (J/g) | Volume resistivity (Ω·cm) | KB (wt %) | Loss factor |
|---|---|---|---|---|---|
| Examples | | | | | |
| 1 | 0.49 | 0 | $6.9 \times 10^6$ | 10 | 0.06 |
| 2 | 0.52 | 0 | $7.5 \times 10^6$ | 10 | 0.05 |
| 3 | 0.47 | 0 | $7.1 \times 10^6$ | 10 | 0.06 |
| 4 | 0.31 | 0 | $6.9 \times 10^6$ | 20 | 0.10 |
| 5 | 0.68 | 0 | $6.7 \times 10^6$ | 10 | 0.08 |
| 6 | 0.63 | 0 | $6.9 \times 10^6$ | 10 | 0.09 |
| 7 | 0.69 | 0 | $7.2 \times 10^6$ | 10 | 0.08 |
| 8 | 0.73 | 0 | $6.9 \times 10^6$ | 10 | 0.09 |
| 9 | 0.67 | 0 | $7.1 \times 10^6$ | 10 | 0.09 |
| 10 | 0.61 | 0 | $7.0 \times 10^6$ | 10 | 0.08 |
| 11 | 0.38 | 0 | $6.8 \times 10^6$ | 10 | 0.08 |
| Comparative Examples | | | | | |
| 1 | 0.68 | 0 | $3.1 \times 10^{13}$ | 0 | 0.02 |
| 2 | 0.85 | 38 | $6.8 \times 10^6$ | 10 | 0.01 |
| 3 | 0.75 | 0 | $6.3 \times 10^6$ | 10 | 0.01 |
| 4 | 0.35 | 0 | $5.5 \times 10^7$ | 10 | 0.03 |
| KB: Ketjenblack | | | | | |

EXAMPLE 12

A resin composition was produced by kneading 70 parts by weight of a polyester resin produced in the same manner as in Example 1:

(A1 + B1)/(A0 + B0):1.0

A1/A0: 1.0

A2/A0: 1.0

B2/B0: 1.0

B3/B0: 1.0

and 30 parts by weight of mica scales ("B-82", tradename of Yamaguchi Mica Co., Ltd.) in a twin-screw kneader at 150°C. The molar ratios of constitutional units and properties of resin composition are respectively shown in Tables 3 and 4.

EXAMPLE 13

A resin composition was produced by kneading 70 parts by weight of a polyester resin produced in the same manner as in Example 2:

(A1 + B1)/(A0 + B0):1.0

A1/A0: 1.0

A2/A0: 0.8

B2/B.0: 1.0

B3/B0: 1.0

and 30 parts by weight of mica scales (B-82) in a twin-screw kneader at 150°C. The molar ratios of constitutional units and properties of resin composition are respectively shown in Tables 3 and 4.

EXAMPLE 14

A resin composition was produced by kneading 70 parts by weight of a polyester resin produced in the same manner as in Example 3:

(A1 + B1)/(A0 + B0):1.0

A1/A0: 1.0

A2/A0: 1.0

B2/B0 1.0

B3/B0: 1.0

and 30 parts by weight of mica scales (B-82) in a twin-screw kneader at 150°C. The molar ratios of constitutional units and properties of resin composition are respectively shown in Tables 3 and 4.

EXAMPLE 15

A resin composition was produced by kneading 63 parts by weight of a polyester resin produced in the same manner as in Example 4:

(A1 + B1)/(A0 + B0):1.0

A1/A0: 1.0

A2/A0: 1.0

B2/B0: 1.0

B3/B0: 1.0

and 37 parts by weight of mica scales (B-82) in a twin-screw kneader at 150°C. The molar ratios of constitutional units and properties of resin composition are respectively shown in Tables 3 and 4.

EXAMPLE 16

A resin composition was produced by kneading 40 parts by weight of a polyester resin produced in the same manner as in Example 5:

(A1 + B1)/(A0 + B0): 1.0

A1/A0: 1.0

A2/A0: 0.73

B2/B0: 1.0

B3/B0: 1.0

and 60 parts by weight of mica scales (B-82) in a twin-screw kneader at 150°C. The molar ratios of constitutional units and properties of resin composition are respectively shown in Tables 3 and 4.

EXAMPLE 17

A resin composition was produced by kneading 70 parts by weight of a polyester resin produced in the same manner as in Example 6:

(A1 + B1)/(A0 + B0):1.0

A1/A0: 1.0

A2/A0: 1.0

B2/B0: 0.8

B3/B0: 0.8

and 30 parts by weight of mica scales (B-82) in a twin-screw kneader at 150°C. The molar ratios of constitutional units and properties of resin composition are respectively shown in Tables 3 and 4.

EXAMPLE 18

A resin composition was produced by kneading 70 parts by weight of a polyester resin produced in the same manner as in Example 7:

(A1 + B1)/(A0 + B0): 1.0

A1/A0: 1.0

A2/A0: 1.0

B2/B0: 1.0

B3/B0: 1.0

and 30 parts by weight of mica scales (B-82) in a twin-screw kneader at 150°C. The molar ratios of constitutional units and properties of resin composition are respectively shown in Tables 3 and 4.

EXAMPLE 19

A resin composition was produced by kneading 70 parts by weight of a polyester resin produced in the same manner as in Example 8:

(A1 + B1)/(A0 + B0): 1.0

A1/A0: 1.0

A2/A0: 1.0

B2/B0: 1.0

B3/B0: 1.0

and 30 parts by weight of mica scales (B-82) in a twin-screw kneader at 150°C. The molar ratios of constitutional units and properties of resin composition are respectively shown in Tables 3 and 4.

EXAMPLE 20

A resin composition was produced by kneading 70 parts by weight of a polyester resin produced in the same manner as in Example 9:

(A1 + B1)/(A0 + B0):1.0

A1/A0: 1.0

A2/A0: 0.8

B2/B0: 1.0

B3/B0: 1.0

and 30 parts by weight of mica scales (B-82) in a twin-screw kneader at 150°C. The molar ratios of constitutional units and properties of resin composition are respectively shown in Tables 3 and 4.

EXAMPLE 21

A resin composition was produced by kneading 40 parts by weight of a polyester resin produced in the same manner as in Example 10:

(A1 + B1)/(A0 + B0): 1.0

A1/A0: 1.0

A2/A0: 0.67

B2/B0: 1.0

B3/B0: 1.0

and 60 parts by weight of mica scales (B-82) in a twin-screw kneader at 150°C. The molar ratios of constitutional units and properties of resin composition are respectively shown in Tables 3 and 4.

EXAMPLE 22

A resin composition was produced by kneading 40 parts by weight of a polyester resin produced in the same manner as in Example 11:

(A1 + B1)/(A0 + B0): 1.0

A1/A0: 1.0

A2/A0: 0.6

B2/B0: 1.0

B3/B0: 1.0

and 60 parts by weight of mica scales (B-82) in a twin-screw kneader at 150°C. The molar ratios of constitutional units and properties of resin composition are respectively shown in Tables 3 and 4.

COMPARATIVE EXAMPLE 5

A resin composition was produced by kneading 70 parts by weight of a polyester resin produced in the same manner as in Comparative Example 2:

(A1 + B1)/(A0 + B0): 0

A1/A0: 0

A2/A0: 0

B2/B0: 0

B3/B0: 0

and 30 parts by weight of mica scales (B-82) in a twin-screw kneader at 250°C. The molar ratios of constitutional units and properties of resin composition are respectively shown in Tables 3 and 4.

COMPARATIVE EXAMPLE 6

A resin composition was produced by kneading 70 parts by weight of a polyester resin produced in the same manner as in Comparative Example 3:

(A1 + B1)/(A0 + B0): 0

A1/A0: 0

A2/A0: 0

B2/B0: 0

B3/B0: 0

and 30 parts by weight of mica scales (B-82) in a twin-screw kneader at 250°C. The molar ratios of constitutional units and properties of resin composition are respectively shown in Tables 3 and 4.

COMPARATIVE EXAMPLE 7

A resin composition was produced by kneading 70 parts by weight of a polyester resin produced in the same manner as in Comparative Example 4:

(A1 + B1)/(A0 + B0): 0

A1/A0: 0

A2/A0: 0

B2/B0: 0

B3/B0: 0

and 30 parts by weight of mica scales (B-82) in a twin-screw kneader at 150°C. The molar ratios of constitutional units and properties of resin composition are respectively shown in Tables 3 and 4.

TABLE 3

| Constitutional Units of Polyester | | | | | | | | | | | |
|---|---|---|---|---|---|---|---|---|---|---|---|
| | dicarboxylic acid units (molar ratio) | | | | diol units (molar ratio) | | | | | | |
| | IA | AzA | TA | SA | PDO | PeDO | MPO | EG | CHDM | MXG | NPG |
| Examples | | | | | | | | | | | |
| 12 | 100 | - | - | - | - | 100 | - | - | - | - | - |
| 13 | 80 | 20 | - | - | - | 100 | - | - | -- | -- | - |
| 14 | 100 | - | - | - | 10 | 90 | -- | - | - | - | -- |
| 15 | 100 | - | - | - | 100 | - | - | - | - | - | - |
| 16 | 73 | 27 | - | - | 100 | - | - | - | - | - | - |
| 17 | 100 | - | - | - | 80 | - | - | - | - | 20 | -- |
| 18 | 100 | - | - | - | 70 | - | - | - | - | - | 30 |
| 19 | 100 | - | - | - | - | - | 100 | - | - | - | - |
| 20 | 80 | 20 | - | - | -- | - | 100 | - | - | - | - |
| 21 | 67 | 33 | - | - | - | - | 100 | -- | - | - | - |
| 22 | 60 | 40 | - | - | - | - | 100 | - | - | - | - |
| Comparative Examples | | | | | | | | | | | |
| 1 | 73 | 27 | - | - | 100 | - | - | - | - | - | - |
| 5 | - | -- | 100 | -- | - | - | - | 100 | - | - | - |
| 6 | - | - | 100 | - | - | - | - | 67 | 33 | - | - |
| 7 | - | - | 50 | 50 | - | - | - | 100 | - | - | - |

IA: Isophthalic acid
AzA: Azelaic acid
TA: Terephthalic acid
SA: Sebacic acid
PDO: 1,3-Propane diol
PeDO: 1,5-Pentane diol
MPO: 2-Methyl-1,3-propane diol
EG: Ethylene glycol
CHDM: Cyclohexane dimethanol
MXG: m-Xylene glycol
NPG: Neopentyl glycol

Table 4

| | [η] (dL/g) | ΔHc (J/g) | B-82 (wt %) | Loss factor |
|---|---|---|---|---|
| Examples | | | | |
| 12 | 0.49 | 0 | 30 | 0.14 |
| 13 | 0.52 | 0 | 30 | 0.13 |
| 14 | 0.47 | 0 | 30 | 0.16 |
| 15 | 0.31 | 0 | 37 | 0.26 |
| 16 | 0.68 | 0 | 60 | 0.28 |
| 17 | 0.63 | 0 | 30 | 0.25 |
| 18 | 0.69 | 0 | 30 | 0.13 |
| 19 | 0.73 | 0 | 30 | 0.15 |
| 20 | 0.67 | 0 | 30 | 0.15 |

Table 4 (continued)

| | [η] (dL/g) | ΔHc (J/g) | B-82 (wt %) | Loss factor |
|---|---|---|---|---|
| Examples | | | | |
| 21 | 0.61 | 0 | 60 | 0.30 |
| 22 | 0.38 | 0 | 60 | 0.26 |
| Comparative Examples | | | | |
| 1 | 0.68 | 0 | 0 | 0.02 |
| 5 | 0.85 | 38 | 30 | 0.01 |
| 6 | 0.75 | 0 | 30 | 0.04 |
| 7 | 0.35 | 0 | 30 | 0.06 |
| B-82: Mica powder | | | | |

EXAMPLE 23

A resin composition was produced by kneading 54 parts by weight of a polyester resin produced in the same manner as in Example 1:

(A1 + B1)/(A0 + B0): 1.0

A1/A0: 1.0

A2/A0: 1.0

B2/B0: 1.0

B3/B0: 1.0

6 parts by weight of electroconductive carbon powder (Ketjenblack EC) and 40 parts by weight of mica powder (B-82) in a twin-screw kneader at 150°C. The molar ratios of constitutional units and properties of resin composition are respectively shown in Tables 5 and 6.

EXAMPLE 24

A resin composition was produced by kneading 54 parts by weight of a polyester resin produced in the same manner as in Example 2:

(A1 + B1)/(A0 + B0): 1.0

A1/A0: 1.0

A2/A0: 0.8

B2/B0: 1.0

B3/B0: 1.0

6 parts by weight of electroconductive carbon powder (Ketjenblack EC) and 40 parts by weight of mica powder (B-82) in a twin-screw kneader at 150°C. The molar ratios of constitutional units and properties of resin composition are respectively shown in Tables 5 and 6.

EXAMPLE 25

A resin composition was produced by kneading 54 parts by weight of a polyester resin produced in the same manner as in Example 3:

(A1 + B1)/(A0 + B0): 1.0

A1/A0: 1.0

A2/A0: 1.0

B2/B0: 1.0

B3/B0: 1.0

6 parts by weight of electroconductive carbon powder (Ketjenblack EC) and 40 parts by weight of mica powder (B-82) in a twin-screw kneader at 150°C. The molar ratios of constitutional units and properties of resin composition are respectively shown in Tables 5 and 6.

EXAMPLE 26

A resin composition was produced by kneading 63 parts by weight of a polyester resin produced in the same manner as in Example 4:

(A1 + B1)/(A0 + B0):1.0

A1/A0: 1.0

A2/A0: 1.0

B2/B0: 1.0

B3/B0: 1.0

7 parts by weight of electroconductive carbon powder (Ketjenblack EC) and 30 parts by weight of mica powder (B-82) in a twin-screw kneader at 150°C. The molar ratios of constitutional units and properties of resin composition are respectively shown in Tables 5 and 6.

EXAMPLE 27

A resin composition was produced by kneading 36 parts by weight of a polyester resin produced in the same manner as in Example 5:

(A1 + B1)/(A0 + B0):1.0

A1/A0: 1.0

A2/A0: 0.73

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 28

A resin composition was produced by kneading 36 parts by weight of a polyester resin produced in the same manner as in Example 6:

(A1 + B1)/(A0 + B0):1.0

A1/A0: 1.0

A2/A0 1.0

B2/B0: 0.8

B3/B0: 0.8

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 29

A resin composition was produced by kneading 36 parts by weight of a polyester resin produced in the same manner as in Example 7:

(A1 + B1)/(A0 + B0):1.0

A1/A0: 1.0

A2/A0: 1.0

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 30

A resin composition was produced by kneading 36 parts by weight of a polyester resin produced in the same manner as in Example 8:

(A1 + B1)/(A0 + B0): 1.0

A1/A0: 1.0

A2/A0: 1.0

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 31

A resin composition was produced by kneading 36 parts by weight of a polyester resin produced in the same manner as in Example 9:

(A1 + B1)/(A0 + B0):1.0

A1/A0: 1.0

A2/A0: 0.8

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 32

A resin composition was produced by kneading 36 parts by weight of a polyester resin produced in the same manner as in Example 10:

(A1 + B1)/(A0 + B0): 1.0

A1/A0: 1.0

A2/A0: 0.67

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

EXAMPLE 33

A resin composition was produced by kneading 36 parts by weight of a polyester resin produced in the same manner as in Example 11:

(A1 + B1)/(A0 + B0):1.0

A1/A0: 1.0

A2/A0: 0.6

B2/B0: 1.0

B3/B0: 1.0

4 parts by weight of electroconductive carbon powder (Ketjenblack EC) and 60 parts by weight of mica powder (B-82) in a twin-screw kneader at 150°C. The molar ratios of constitutional units and properties of resin composition are respectively shown in Tables 5 and 6.

COMPARATIVE EXAMPLE 8

A resin composition was produced by kneading 36 parts by weight of a polyester resin produced in the same manner as in Comparative Example 2:

(A1 + B1)/(A0 + B0): 0

A1/A0: 0

A2/A0: 0

B2/B0: 0

B3/B0: 0

4 parts by weight of electroconductive carbon powder (Ketjenblack EC) and 60 parts by weight of mica powder (B-82) in a twin-screw kneader at 250°C. The molar ratios of constitutional units and properties of resin composition are respectively shown in Tables 5 and 6.

COMPARATIVE EXAMPLE 9

A resin composition was produced by kneading 54 parts by weight of a polyester resin produced in the same manner as in Comparative Example 3:

(A1 + B1)/(A0 + B0): 0

A1/A0: 0

A2/A0: 0

B2/B0: 0

B3/B0: 0

6 parts by weight of electroconductive carbon powder (Ketjenblack EC) and 40 parts by weight of mica powder (B-82) in a twin-screw kneader at 250°C. The molar ratios of constitutional units and properties of resin composition are respectively shown in Tables 5 and 6.

COMPARATIVE EXAMPLE 10

A resin composition was produced by kneading 36 parts by weight of a polyester resin produced in the same manner as in Comparative Example 4:

(A1 + B1)/(A0 + B0): 0

A1/A0: 0

A2/A0: 0

B2/B0: 0

B3/B0: 0

4 parts by weight of electroconductive carbon powder (Ketjenblack EC) and 60 parts by weight of mica powder (B-82)

in a twin-screw kneader at 150°C. The molar ratios of constitutional units and properties of resin composition are respectively shown in Tables 5 and 6.

Table 5

| Constitutional Units of Polyester | | | | | | | | | | | |
|---|---|---|---|---|---|---|---|---|---|---|---|
| dicarboxylic acid units (molar ratio) | | | | | diol units (molar ratio) | | | | | | |
| | IA | AzA | TA | SA | PDO | PeDO | MPO | EG | CHDM | MXG | NPG |
| Examples | | | | | | | | | | | |
| 23 | 100 | - | - | - | - | 100 | - | - | - | - | - |
| 24 | 80 | 20 | - | - | - | 100 | - | - | - | - | - |
| 25 | 100 | - | - | - | 10 | 90 | - | - | - | - | - |
| 26 | 100 | - | - | - | 100 | - | - | - | - | - | - |
| 27 | 73 | 27 | - | - | 100 | - | - | - | - | - | - |
| 28 | 100 | - | - | - | 80 | - | - | - | - | 20 | - |
| 29 | 100 | - | - | - | 70 | - | -- | - | - | - | 30 |
| 30 | 100 | - | - | - | - | - | 100 | - | - | - | - |
| 31 | 80 | 20 | -- | - | - | - | 100 | - | - | -- | - |
| 32 | 67 | 33 | - | - | - | - | 100 | - | - | - | - |
| 33 | 60 | 40 | - | - | - | - | 100 | - | - | - | - |
| Comparative Examples | | | | | | | | | | | |
| 8 | - | - | 100 | - | - | - | - | 100 | - | - | - |
| 9 | - | - | 100 | - | - | - | - | 67 | 33 | - | -- |
| 10 | - | - | 50 | 50 | - | -- | - | 100 | - | - | - |

IA: Isophthalic acid
AzA: Azelaic acid
TA: Terephthalic acid
SA: Sebacic acid
PDO: 1,3-Propane diol
PeDO: 1,5-Pentane diol
MPO: 2-Methyl-1,3-propane diol
EG: Ethylene glycol
CHDM: Cyclohexane dimethanol
MXG: m-Xylene glycol
NPG: Neopentyl glycol

Table 6

| | [η] (dL/g) | ΔHc (J/g) | Volume resistivity (Ω·cm) | KB (wt %) | B-82 (wt %) | Loss factor |
|---|---|---|---|---|---|---|
| Examples | | | | | | |
| 23 | 0.49 | 0 | $7.2 \times 10^6$ | 6 | 40 | 0.20 |
| 24 | 0.52 | 0 | $7.1 \times 10^6$ | 6 | 40 | 0.19 |
| 25 | 0.47 | 0 | $7.0 \times 10^6$ | 6 | 40 | 0.21 |
| 26 | 0.31 | 0 | $6.8 \times 10^6$ | 7 | 30 | 0.32 |
| 27 | 0.68 | 0 | $7.0 \times 10^6$ | 4 | 60 | 0.29 |
| 28 | 0.63 | 0 | $6.6 \times 10^6$ | 4 | 60 | 0.27 |
| 29 | 0.69 | 0 | $7.2 \times 10^6$ | 4 | 60 | 0.20 |
| 30 | 0.73 | 0 | $6.9 \times 10^6$ | 4 | 60 | 0.30 |
| 31 | 0.67 | 0 | $7.1 \times 10^6$ | 4 | 60 | 0.26 |

Table 6 (continued)

| | [η] (dL/g) | ΔHc (J/g) | Volume resistivity (Ω·cm) | KB (wt %) | B-82 (wt %) | Loss factor |
|---|---|---|---|---|---|---|
| Examples | | | | | | |
| 32 | 0.61 | 0 | $7.1 \times 10^6$ | 4 | 60 | 0.31 |
| 33 | 0.38 | 0 | $6.8 \times 10^6$ | 4 | 60 | 0.27 |
| Comparative Examples | | | | | | |
| 8 | 0.85 | 38 | $6.7 \times 10^6$ | 4 | 60 | 0.02 |
| 9 | 0.75 | 0 | $6.5 \times 10^6$ | 6 | 40 | 0.05 |
| 10 | 0.35 | 0 | $5.1 \times 10^7$ | 4 | 60 | 0.13 |

KB: Ketjenblack
B-82: Mica powder

As seen from Tables 2, 4 and 6, the resin compositions of the invention show a high vibration damping ability as compared with the resin composition of Comparative Example 1 having a volume resistivity of more than $10^{12}$ Ω·cm. As compared with the resin compositions of Comparative Examples 2-10 having a ratio, (A1 + B1)/(A0 + B0), of less than 0.5, the resin compositions of the invention have a larger loss factors and show good vibration damping performance.

The resin composition of the invention is easily produced and capable of providing a lightweight material having an improved vibration damping ability. Thus, the invention is of great industrial value.

## Claims

**1.** A resin composition comprising a polyester resin containing dicarboxylic acid constitutional units and diol constitutional units and at least one of an electroconductive material and filler which is dispersed in the polyester resin, wherein the polyester resin satisfies the following relationship I:

$$0.5 \leq (A1 + B1)/(A0 + B0) \leq 1 \qquad (I)$$

wherein A0 is the number of total dicarboxylic acid constitutional units, B0 is the number of total diol constitutional units, A1 is the number of dicarboxylic acid constitutional units having an odd number of carbon atoms in a polyester main chain, and B1 is the number of diol constitutional units having an odd number of carbon atoms in the polyester main chain.

**2.** The resin composition according to claim 1, wherein the polyester resin satisfies the following relationship II:

$$0.5 \leq A1/A0 \leq 1 \qquad (II)$$

wherein A1 and A0 are as defined above, and
the following relationship III:

$$0.5 \leq B2/B0 \leq 1 \qquad (III)$$

wherein B0 is as defined above and B2 is the number of constitutional units derived from the diol represented by the following formula 1:

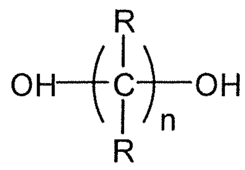 (1)

wherein n is 3 or 5, and Rs may be the same or different and each independently hydrogen atom or $C_1$ to $C_3$ alkyl group

**3.** The resin composition according to claim 1 or 2, wherein the polyester resin satisfies the following requirements A and B:

(A) an intrinsic viscosity is 0.2 to 2.0 dL/g when measured at 25°C in a 40/60 by weight trichloroethane/phenol mixed solvent, and
(B) a heat value of a crystallization exotherm peak is 5 J/g or lower when measured by a differential scanning calorimeter under temperature drop conditions.

**4.** The resin composition according to claim 2 or 3, wherein the ratio, B2/B0, is 0.7 to 1.

**5.** The resin composition according to any one of claims 1 to 4, wherein the polyester resin satisfies the following relationship V:

$$0.5 \leq A2/A0 \leq 1 \qquad (V)$$

wherein A0 is as defined above and A2 is the number of constitutional units derived from at least one dicarboxylic acid selected from the group consisting of isophthalic acid, malonic acid, glutaric acid, pimelic acid, azelaic acid, undecanedioic acid, brassilic acid and 1,3-cyclohexanedicarboxylic acid.

**6.** The resin composition according to claim 5, wherein the ratio, A2/A0, is 0.7 to 1.

**7.** The resin composition according to any one of claims 1 to 6, wherein the polyester resin satisfies the following relationship VII:

$$0.5 \leq A3/A0 \leq 1 \qquad (VIIø$$

wherein A0 is as defined above and A3 is the number of constitutional units derived from isophthalic acid.

**8.** The resin composition according to according to any one of claims 5 to 7, wherein the polyester resin satisfies the following relationship VIII:

$$0.5 \leq B3/B0 \leq 1 \qquad (VIII)$$

wherein B0 is as defined above and B3 is the number of constitutional units derived from at least one diol selected from the group consisting of 1,3-propanediol, 1,5-pentanediol, 2-methyl-1,3-propanediol, 1,3-butanediol and neopentyl glycol.

**9.** The resin composition according to claim 8, wherein the ratio, B3/B0, is 0.7 to 1.

**10.** The resin composition according to any one of claims 1 to 9, wherein the diol constitutional units having an odd number of carbon atoms in the polyester main chain are units derived from at least one diol selected from the group consisting of 1,3-propanediol, 1,5-pentanediol, 2-methyl-1,3-propanediol, 1,3-butanediol and neopentyl glycol.

**11.** The resin composition according to claim 1 to 10, wherein the dicarboxylic acid is a combination of isophthalic acid and azelaic acid.

**12.** The resin composition according to any one of claims 1 to 11, wherein the electroconductive material is a carbonaceous material.

**13.** The resin composition according to any one of claims 1 to 12, wherein the electroconductive material is an electroconductive carbon powder.

**14.** The resin composition according to any one of claims 1 to 13, wherein a content of the electroconductive material is 0.01 to 25% by mass.

**15.** The resin composition according to any one of claims 1 to 14, wherein the composition has a volume resistivity of $10^{12}$ Ω·cm or lower.

**16.** The resin composition according to any one of claims 1 to 15, wherein the filler is scaly inorganic filler.

**17.** The resin composition according to claim 16, wherein the filler is mica scale.

**18.** The resin composition according to any one of claims 1 to 17, wherein a content of the filler is 10 to 80% by mass.

**19.** A vibration damping material comprising the resin composition as defined in any one of claims 1 to 18.

**20.** A vibration damper comprising a shaped article of the vibration damping material as defined in claim 19.

European Patent Office

# EUROPEAN SEARCH REPORT

Application Number
EP 05 10 1303

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br>Y | EP 0 516 081 A (TOYO BOSEKI KABUSHIKI KAISHA; NIPPON STEEL CORPORATION)<br>2 December 1992 (1992-12-02)<br><br>* page 3, lines 18-23 *<br>* page 4, lines 52-57 *<br>* examples 1,3,11; table 1 *<br>----- | 1-13,16, 19,20<br><br>14,15, 17,18 | C08K3/04<br>C08K3/22<br>C08L67/02<br>F16F9/00 |
| Y | PATENT ABSTRACTS OF JAPAN<br>vol. 015, no. 317 (C-0858),<br>13 August 1991 (1991-08-13)<br>& JP 03 119063 A (NIPPON STEEL CORP),<br>21 May 1991 (1991-05-21)<br>* abstract *<br>----- | 14,15, 17,18 | |
| X | US 6 635 721 B1 (MOENS LUC ET AL)<br>21 October 2003 (2003-10-21)<br>* column 2, line 63 - column 3, line 33 *<br>* column 5, lines 27-56 *<br>* example 1 *<br>----- | 1-13 | |
| | | | TECHNICAL FIELDS SEARCHED (Int.Cl.7) |
| Y | PATENT ABSTRACTS OF JAPAN<br>vol. 1996, no. 07,<br>31 July 1996 (1996-07-31)<br>& JP 08 073648 A (C C I KK),<br>19 March 1996 (1996-03-19)<br>* abstract *<br>----- | 17,18 | C08L<br>C08K<br>F16F |

The present search report has been drawn up for all claims

| Place of search | Date of completion of the search | Examiner |
|---|---|---|
| The Hague | 5 July 2005 | Denis, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 05 10 1303

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2005

| Patent document cited in search report | | Publication date | Patent family member(s) | | | Publication date |
|---|---|---|---|---|---|---|
| EP 0516081 | A | 02-12-1992 | JP | 2613502 | B2 | 28-05-1997 |
| | | | JP | 4353514 | A | 08-12-1992 |
| | | | DE | 69222222 | D1 | 23-10-1997 |
| | | | DE | 69222222 | T2 | 26-02-1998 |
| | | | EP | 0516081 | A2 | 02-12-1992 |
| | | | KR | 9511907 | B1 | 12-10-1995 |
| | | | US | 5183863 | A | 02-02-1993 |
| JP 03119063 | A | 21-05-1991 | NONE | | | |
| US 6635721 | B1 | 21-10-2003 | BE | 1009779 | A4 | 05-08-1997 |
| | | | AT | 235539 | T | 15-04-2003 |
| | | | AU | 710516 | B2 | 23-09-1999 |
| | | | AU | 1026297 | A | 27-06-1997 |
| | | | WO | 9720895 | A1 | 12-06-1997 |
| | | | BR | 9611696 | A | 28-12-1999 |
| | | | CA | 2238435 | A1 | 12-06-1997 |
| | | | CN | 1203619 | A ,C | 30-12-1998 |
| | | | DE | 69627010 | D1 | 30-04-2003 |
| | | | DE | 69627010 | T2 | 11-12-2003 |
| | | | EA | 690 | B1 | 28-02-2000 |
| | | | EP | 0865470 | A1 | 23-09-1998 |
| | | | ES | 2191122 | T3 | 01-09-2003 |
| | | | IL | 124553 | A | 26-08-2001 |
| | | | JP | 2000501441 | T | 08-02-2000 |
| | | | NO | 982551 | A | 05-08-1998 |
| | | | NZ | 323341 | A | 29-09-1999 |
| | | | PL | 327180 | A1 | 23-11-1998 |
| | | | TR | 9800999 | T2 | 21-09-1998 |
| JP 08073648 | A | 19-03-1996 | JP | 3581940 | B2 | 27-10-2004 |

EPO FORM P0459

For more details about this annex : see Official Journal of the European Patent Office, No. 12/82